# EUROPEAN PATENT APPLICATION

(11) **EP 1 835 234 A2**
(43) Date of publication of application: **19.09.2007**
(21) Application number: 07103427.6
(22) Date of filing: 02.03.2007
(51) Int. Cl.: F24D 3/14, F24D 19/10

(54) **Mat or floor heating system**

(30) Priority: 15.03.2006 IT BO20060185
(71) Applicant: Giampieri, Roberto, 40026 Imola (IT)
(72) Inventor: Giampieri, Roberto, 40026 Imola (IT)
(74) Representative: Porsia, Dino

(57) **Abstract**

Mat or floor heating system, particularly for areas of artistic, cultural and/or monumental value and for mobile applications in general, characterized in that it comprises at least one base layer (11) of suitable plastics material, of suitable thickness, on the upper face of which are formed channels (12) for housing the channel-like part (114) of a sheet-like layer (14) of aluminium or other suitable material, which bears on the whole upper face of the said base layer to act as a heat distributor and accumulator, and also as a reinforcement to protect the heating circuit which is made from tubes (16) housed in the channel-like part (114) of the said sheet-like layer of aluminium (14) whose channel-like part (114) is provided at its ends with apertures (17, 17', 17") through which the said tubes (16) can bend and pass from one channel (114) to the next, to form a zigzag covering the mat in a distributed way, the tubes being connected at the said end apertures to manifold tubes (16', 16") housed in suitable transverse channels of the base layer and provided at their ends with means for connection to a unit for the production and low-pressure circulation of a liquid, such as glycol-water, at a precise temperature, usually not exceeding 40°C, any suitable finishing surface (22) for walking on being mounted on the said metallic surface (14) and having aesthetic characteristics adapted on different occasions to the environment in which the radiant mat is positioned and having characteristics such that the heat radiated by the underlying circulation of hot liquid can pass through it.

## Description

The invention relates to a heating system which makes it possible to overcome the obstacles to the air conditioning of places of particular artistic, cultural and monumental value, such as churches, museums, historic buildings, art galleries and the like, in which the spaces to be heated often have large horizontal dimensions and have heights which may be in excess of ten metres, and in which the value of the premises to be air-conditioned is often very high because of the presence of paintings and architectural elements and/or because of the presence of marble or mosaic floors and other structures which are sensitive to thermal and moisture gradients and to the presence of airborne contaminants which may be carried by convective movements, and which have surfaces on which dust tends to accumulate. The dimensions of these buildings make the use of conventional heating systems difficult or impossible, since the volumes of air to be heated are very large in relation to the volumes actually occupied by persons and objects. Owing to the value of the architectural structures of these sites, no demolition work or structural modification of any kind can be permitted, and the visual impact of current air-conditioning systems is unacceptable. Because of the presence of sensitive works of art, it is impossible to use fan or convection heating systems, such as thermo-siphons, due to the inevitable formation of air currents which would carry pollutants towards the said sensitive works.

The only possible heating solution for these sites is a radiant mat system which is placed on the floor of the areas subject to pedestrian traffic and which operates at average temperatures of less than 40°C. The prior art teaches the use of radiant mats to be placed on the floor, supplied with electricity at mains frequency and at low voltage for obvious reasons of safety. This solution entails a high electricity consumption, since the heat is produced by the Joule effect and requires the use of transformers which are very bulky, since they are intended to produce a low supply voltage with very high currents in order to provide the electrical power necessary to supply mats which may have a very large area. With these solutions, it is also difficult to reconcile the wear-resistance of the floor with good thermal conductivity, and the alternating current supply inevitably leads to electromagnetic pollution. The system also requires the careful use of expensive fireproof materials, to prevent the initiation of fire in the electrical heating resistances, which may give rise to overheating and electrical discharges when localized damage is present.

The invention is intended to overcome all these and other problems of the prior art, with a radiant mat heating system as claimed in the attached Claim 1 and in the dependent claims, which makes use of the following idea for a solution. The system according to the invention makes use of modular interlocking base mats of suitable plastics material, provided with male and/or female connectors on their sides and having channels formed in their upper faces to house products made from aluminium or other suitable material, having a profile substantially in the form of an inverted omega, such that they engage the said upper channels of the mats with their bent parts and bear on the mats with their flanges, which are designed to be linked to those of the neighbouring and following sections, so as to form a true metallic mesh which is as flexible as the underlying mat. The upwardly open channels of these aluminium sections house pressure-resistant tubes of plastics material, of the type used in existing floor heating systems, which can bend and pass from one channel to the next at the ends of the said sections, through apertures formed in the channels of the said sections, so that they cover the mat in a uniform way with a zigzag configuration and can be connected to delivery and outlet manifolds whose ends can be designed for rapid connection to other modular mats of the type in question, a glycol-water solution or other suitable liquid being circulated at low pressure through the radiant circuit formed in this way, the liquid being heated by systems with high thermal efficiency, such as a heat pump, with a heat exchanger and a corresponding circulating pump. A protective surface of any suitable flooring material is fitted on to the metallic surface formed by the coplanar flanges of the said aluminium sections, which act as reinforcements for the radiant tubes and also as heat sinks to distribute the heat and make it uniform over the whole surface of the mat.

Further characteristics of the invention, and the advantages resulting therefrom, will be made clearer by the following description of a preferred embodiment of the invention, illustrated purely by way of example and without restrictive intent in the figures on the four attached sheets of drawing, in which:
- Fig. 1 is a block diagram of the supply equipment for the radiant mat system in question;
- Figs. 2 and 3 show a plan view from above of some possible positions of the heating tube zigzags and the corresponding manifolds in the mat;
- Fig. 4 shows details of the mat viewed in cross section along the line IV-IV of Figure 2;
- Fig. 5 shows in a perspective view from above a possible embodiment of the base layer of the radiant mat;
- Fig. 6 is a perspective view from above of the base layer of the radiant mat, with two adjacent metal sections, having a profile in the form of an inverted omega, for containing the heating liquid circulation tubes;
- Fig. 7 shows cross sections, taken as in Figure 4, of two of the adjacent inverted omega metal sections for containing the heating liquid circulation tubes, with possible variant profiles;
- Fig. 8 shows other details of the radiant mat viewed in cross section along the line VIII-VIII of Figure 2 and relating to the passage of the tubes and of the manifolds on the opposite sides of the said mat;
- Figs. 9 and 10 show details viewed according to the sections IX-IX and X-X of Figure 8.

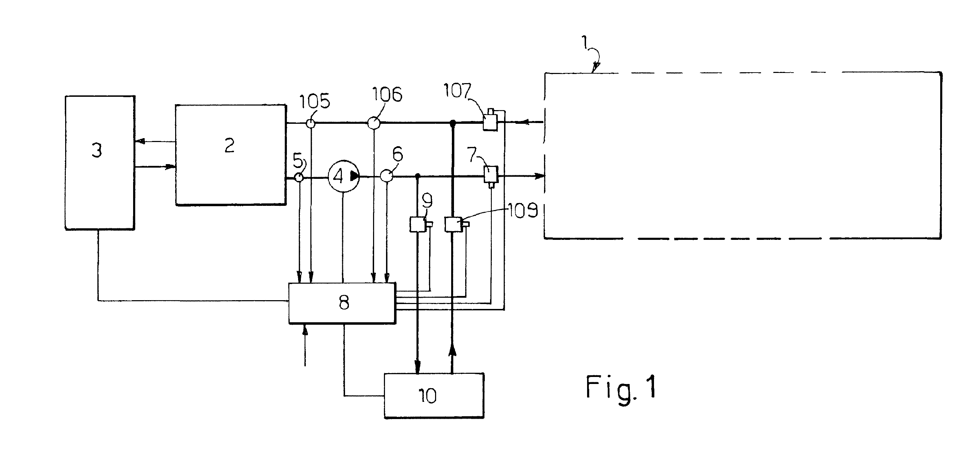

In Figure 1, the number 1 indicates the radiant mat, made from interlocking flooring modules which are flexible and can therefore be rolled up for transport and storage, which is heated by the forced circulation through it of a heating liquid, for example glycol-water mixture drawn from a compensation reservoir contained for example in a heat exchanger 2, the water being heated to the required temperature, not exceeding 40°C on average, by a heat pump 3, the efficiency of this system being approximately four times greater than that of direct heating by the Joule effect. The number 4 indicates the hot water circulation pump; the numbers 5, 105 and 6, 106 indicate, respectively, temperature and pressure probes which detect the temperature and pressure of the circulating water, on both the delivery and return branches of the mat 1, while the numbers 7, 107 indicate solenoid valves fitted on these supply and return branches of the mat 1. All the aforesaid components are controlled by an electronic processing unit 8 which supervises the operation of the installation and which is provided, in case of anomaly, with all the necessary safety devices to automatically stop the installation and give warning of the incident. The heat pump 3 can advantageously be of the type with a reversible circulation compressor, operating with a hydronic system whose primary fluid can supply heat energy in winter and cold energy in summer. In the summer, the unit 8 is operated to set the heat pump 3 to produce cold energy, the solenoid valves 7, 107 are closed and the chilled water present in the exchanger 2 is circulated by the pump 4, by means of branching solenoid valves 9, 109, through one or more fan coil units or dehumidifiers 10 to cool the environment. The use of the radiant mat 1 to cool the environment is not advisable, since the cold surface of the mat would cause condensation of moisture on the upper surface of the floor, and this solution would therefore be inefficient.

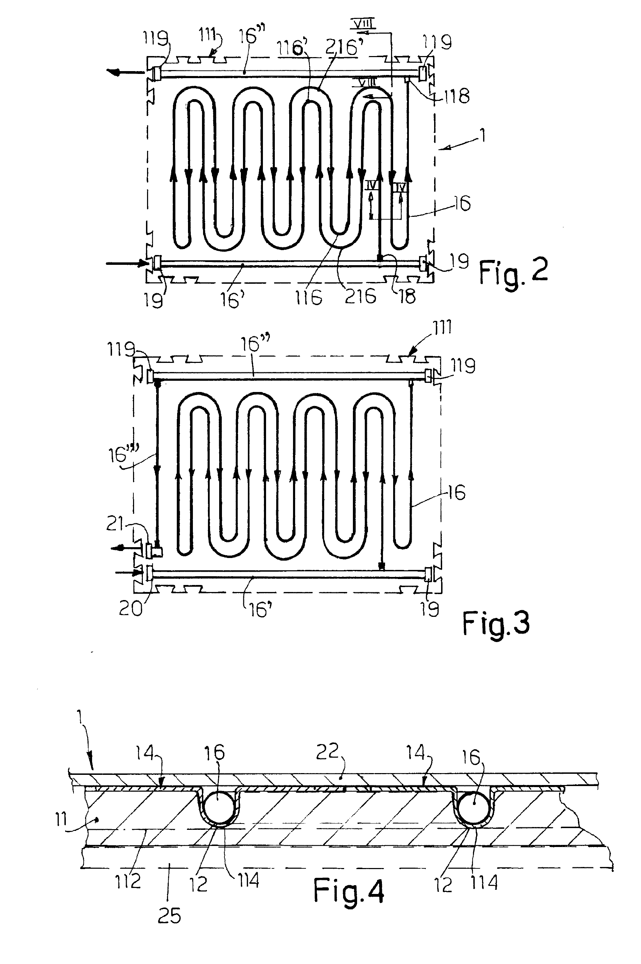

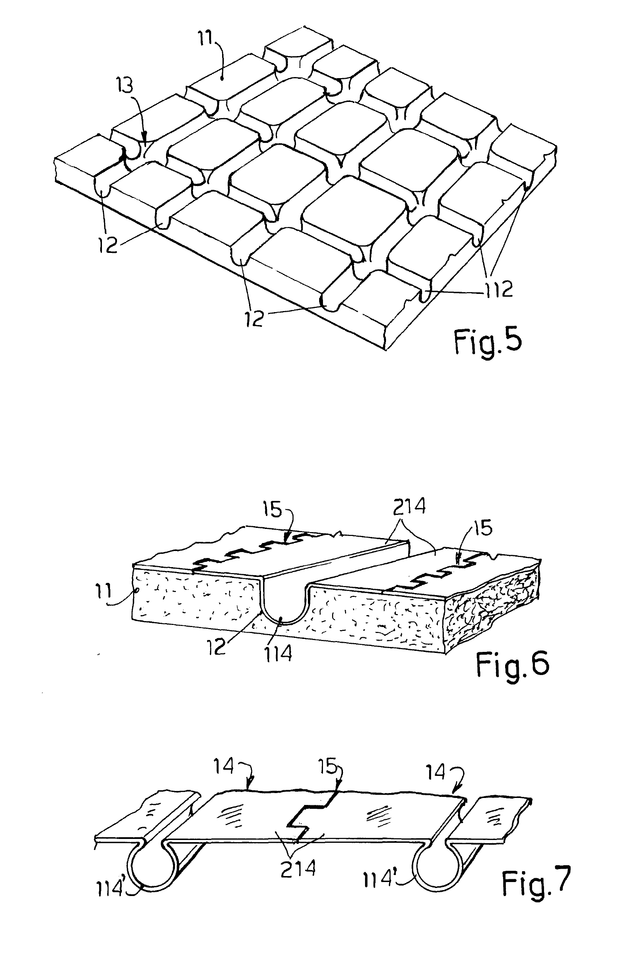

With reference to Figures 2, 4, 5 and 6, it can be seen that the radiant mat 1 is formed from interlocking modules, each having a base layer 11 of suitable thickness, made from any plastics material suitable for the formation of mats, such as EVA (ethyl vinyl acetate) with any necessary reinforcing fillers, these modules being provided on their sides with dovetail connectors 111 in such a way that they can be joined together sequentially and/or side by side to form the mat having the dimensions required on different occasions. Interlocking EVA mats are currently produced in Italy by the DAF Sport company. As shown in Figure 5, the layer 11 has open channels 12, parallel to each other, on its upper face, these channels being spaced apart at a constant interval of about 80 mm for example, and preferably has a grid of channels 12, 112 in the form of a square mesh with a side of approximately 80 mm, whose intersection areas 13 are suitably connected and enlarged for the reasons given below. The channels 12 house the rounded parts 114 of metal sections 14, preferably made from aluminium or other suitable material, having a profile substantially in the shape of an inverted omega; the flanges 214 of these sections bear on the upper face of the layer 11 and, as shown in Figure 6, the longitudinal sides of these flanges are provided with toothed edges 15 with male and female components of square, roughly triangular or trapezoidal shape, which interlock with each other in a comb-like way and with sufficient play to provide a structural connection between the different sections 14 and to enable them to bend at the positions of the combs 15 when the mat in question is, for example, rolled up or folded for storage or transport.

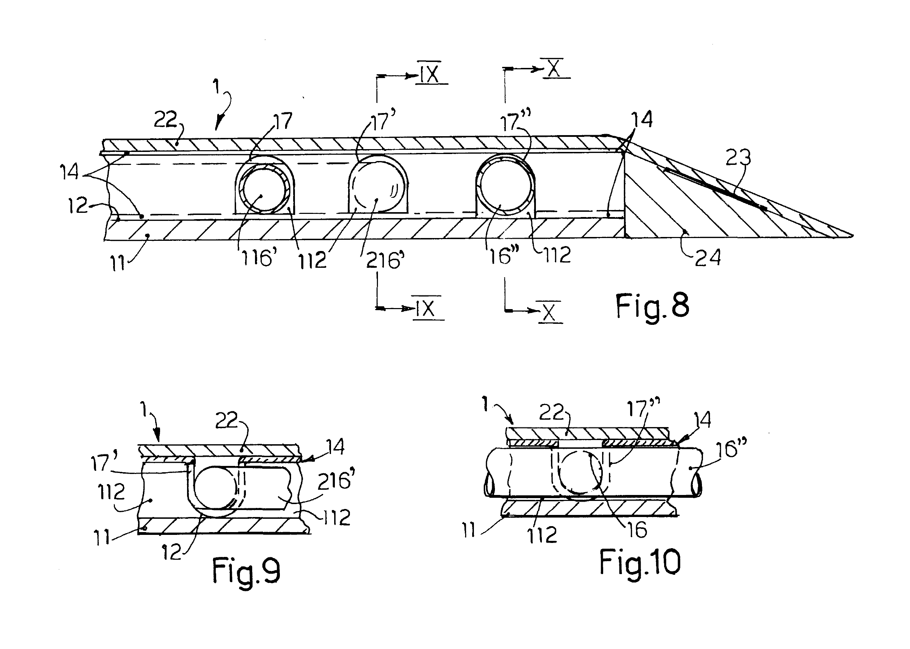

The sections 14 engage the channels 12 along their whole length, as shown in Figure 8. The bent part 114 of the sections 14 houses, without any projection, the zigzag of tubes of multi-layer plastics material with a protective sheath 16 for the circulation of the heating liquid, and, since these tubes are relatively flexible, the said bent part 114 of the sections 14 can be completely open at the top, as shown in Figures 4 and 6, or can be partially closed on to itself in the upper part, as shown in the variant of Figure 7 and as indicated by 114', so as to leave only a small opening into which the tube 16 can be inserted by deformation or can be threaded longitudinally.

At their ends, the sections 14 are provided in their bent parts 114 with transverse apertures 17, 17', 17" as shown in Figure 8, which are positioned next to the same number of nodes 13 of the grid of channels 12, 112 provided on the base layer 11 of Figure 5; these apertures of the sections 14 can have closed bottoms as shown in Figure 9, or can have open bottoms as shown in Figure 10, so that they contact the bent part 114 of the section 14 over its whole height. The bends 116, 116' and 216, 216' of the heating tubes 16, positioned for example as shown in Figure 2, can pass through these apertures 17, 17', while the tubes of larger section 16' and 16", which form the heating liquid delivery and return manifolds respectively, pass through the apertures 17". Clearly, all the aforesaid bends and also the manifolds are protected under flanges 214 of the sections 14. To facilitate the formation of the said apertures 17, 17', 17", the bent part of the sections 14 can be provided, at specified intervals corresponding to those of the channels 112 of the base layer 11, with pairs of transverse pre-formed cuts, in such a way that the portion of channel 114 lying between a pair of the said cuts can be flattened by means of pliers and bent upwards, under the flanges 214, or can be removed by means of cutting pincers, so as to form the said openings at any desired points of the said sections 14.

The tubes 16 are connected to the manifolds 16' and 16" with quick-release connectors 18, 118, while the said manifolds are provided at their ends with quick-release connectors 19, 119 which are normally closed but which can open automatically when the complementary components of a radiant mat, which is to be placed adjacent to another mat of the type in question and connected sequentially to it, are inserted into them. The manifolds 16' and 16" can also be provided with quick-release connectors for connection to parallel manifolds of other adjacent radiant mats, although this is not shown in Figure 2.

The circuit of Figure 3 shows how it is possible to place the heating liquid inlet and outlet connectors 20 and 21 on the same side of the mat, by connecting the outlet connector 21 to the manifold 16" by means of a branch 16"' housed in a corresponding section 14.

Clearly, the base layer 11 can be provided, in a different way from what has been described so far, with a single row of parallel channels 12, and the bends of the circulation tubes 16 and the manifolds can be housed in portions of base layer 11 fitted into and added to the ends of the main layer, these added portions being provided with recessed parts to house the projecting ends of the sections 14 with the aforesaid corresponding openings 17, 17', 17", for the passage of the bends of the tubes 16 and of the delivery and return manifold 16', 16". This variant is not shown in the drawings, since it can easily be understood and constructed by persons skilled in the art on the basis of the description alone.

As shown in Figures 4 and 8, the mat is completed by a top covering and finishing layer of any material which can meet the requirements of high mechanical strength and good thermal conductivity, and which can meet the various aesthetic and environmental requirements which may be present on different occasions. The finishing layer 22 can be fixed at least by its opposite sides or around its whole perimeter with strips of Velcro 23 or other removable fastening means, to wedge-like inserts 24 which are, for example, fitted into the base layer 11, as shown by way of example in Figure 8, which can also have the purpose of facilitating movement on to and down from the mat 1 with perambulators or buggies and avoid the presence of edges over which persons may trip, even though the total thickness of the mat can be limited to about 20-25 mm. The finishing layer 22 can cover a plurality of base modules 11 and the different finishing layers 22 can be fastened together in a removable way, to provide continuity in the flooring surface, with the additional purpose of facilitating cleaning.

In Figure 4, the number 25 and the broken lines indicate a possible supporting structure which imparts rigidity to the mat and which enables the mat to be used to form heated floors in stands, in pits for motor and motorcycle racing, or on stages for artistic performances, including those given outdoors, or for other purposes.

It is clear from the description that:
- The operating principle of the system, implemented by means of a number of common known floor heating installations, combined with the innovative structure in the form of an interlocking modular mat which is mobile and can be removed and rolled up or folded if necessary, permits normal maintenance operations on the floor or the temporary use of the heating system on certain occasions only, and is the only system which can be used when it is necessary to provide an efficient heating system in places where, for various reasons, it is impossible to carry out demolition or aesthetically damaging work
- The floor heating system provides an absolute reduction in the problems arising from the transport of dust, smoke and pollutants which accompanies any other type of heat distribution using forced ventilation systems or thermal convective motion
- The areas with a thermal gradient can be determined in advance and precisely delimited, with considerable benefits for decoration and/or design elements which are sensitive to temperature variations, and the surface temperatures are always less than 40°C in all cases
- The characteristic tunnel shape of the heated area, which extends to a height of not more than 2-2.5 m above the heating mat surface, prevents the development of violent convective and ascending motion and drastically reduces energy consumption, by practically eliminating the upward dispersion of heat, since the heat will never affect, for example, the ceiling of a church or cathedral, or the vaulting of a historic palace
- The multi-layer mat configuration allows a wide choice of design of the top finishing covering 22, enabling the system to be made fully compatible with the environments of the sites where it is used on different occasions
- The use of low-temperature heat (25-40°C) makes it possible to use systems for producing heat with a thermodynamic cycle of the "heat pump" type, with their distinctive and considerable energy saving benefits due to the high energy utilization factor and the absence of flames, smoke, gases and other pollutants
- The heating mats according to the invention can be used to create numerous layouts for the areas to be heated, to meet all the requirements of each environment
- The characteristics of flow rate, wear resistance and transportability of the mat system can be varied according to the material and dimensional characteristics of the sandwich incorporating the grid of heating tubes 16
- The different structural versions and the different cutting dimensions of the mat modules, which are joined together to provide the heating surface which is required on different occasions, can be designed so as to provide the greatest versatility of assembly. One-off customized versions can always be produced for particular requirements.

These are the exclusive features of the system which make it practically indispensable in types of premises which are of specific interest, since they meet all the following requirements:
- Safety and energy saving
- Absolute independence and autonomy of the installation with respect to the application environment
- Very low environmental impact
- Minimal changes of the temperature and humidity conditions
- No structural modification of the structures in which it is used; this condition is considered primary and essential for the acceptability of the system for applications relating to the cultural heritage

Another very useful range of applications of the system in a more general environment can be provided by modifying the type and structural characteristic of the sandwich support or of the complementary lower part 25 of Figure 4, by using self-supporting, weatherproof, non-marking or other materials, to provide a mobile modular heating floor for heating, for example, exhibition structures such as those used at trade fairs, staging for exhibitions and performances, seasonal sports structures, and mobile and temporary extensions of public premises such as bars, restaurants and the like, thus effectively and advantageously replacing the existing patio heater systems using open flames and metallic reflectors, which have poor energy and comfort characteristics and are hazardous and polluting.

When floor heating of the type according to the invention is used, all the problems are resolved, as in the cultural application, in an efficient, elegant, environmentally friendly and economical way. This is because, in a heat pump system, the only energy source required is the electricity supply, which is available everywhere, and furthermore the same installation can be used during the hot season by reversing the cycle and using fan coil units or dehumidifiers to cool the same areas.

As stated previously, the mat heating system according to the invention uses the established technology of floor air conditioning installations, except as regards the following specific features:
- Some modifications to the connection systems between the different portions of the hydraulic circuit, in which the hot water circulates, relating to the individual modules making up the heating surface and to the distribution manifolds which must be of the quick-release self-sealing type
- The shape and thickness of the insulating layer on the lower surface of the module, which must be flexible in the case of the mat or rigid embodiment, and mechanically load bearing for the floor version
- The quality of the material and the shape of the recesses to be created in it at various intervals, which form the grid which houses the tube 16 of special multi-layer plastics material with a protective sheath, which carries the heat transfer fluid
- The presence on the upper side of the said grid, in contact with the tubes 16, of a layer of aluminium formed from a sheet of suitable thickness, which acts as a diffuser of heat from the tubes 16 towards the whole surface of the module and as a layer which is not deformed when walked on. In the case of the mat, but possibly not in the case of the self-supporting floor, the said aluminium sheet is made in the form of adjacent sections 14 with a profile in the shape of an inverted omega, enabling the mat to be bent or folded during storage and transport
- The system of "weaving" the hydraulic circuit, which must be suitable for the shape, size and thermal output required for each module and must provide an adequate number of possibilities for connecting the inlet and outlet tubes, to enable the individual modules to be laid out in different relative arrangements to form the radiant surface required on different occasions
- Various types of floor finish surfaces 22, such as moquette, parquet, linoleum and rubber sheets with various cut-out surfaces, which are to be positioned for secure connection to each other, detachably if necessary, and which can be numbered underneath, as can the base layers 11, to facilitate the rearrangement of the "jig-saw puzzle" configuration which can be formed on different occasions by the radiant mat system according to the invention.

## Claims

1. Mat or floor heating system, particularly for areas of artistic, cultural and/or monumental value and for mobile applications in general, **characterized in that** it comprises at least one base layer (11) of suitable plastics material, of suitable thickness, on the upper face of which are formed channels (12) for housing the channel-like part (114) of a sheet-like layer (14) of aluminium or other suitable material, which bears on the whole upper face of the said base layer to act as a heat distributor and accumulator, and also as a reinforcement to protect the heating circuit when it is walked on, the circuit being made from tubes (16) housed in the channel-like part (114) of the said sheet-like layer of aluminium (14) whose channel-like part (114) is provided at its ends with apertures (17, 17', 17") through which the said tubes (16) can bend and pass from one channel (114) to the next, to form a zigzag covering the mat in a distributed way, the tubes being connected at the said end apertures to manifold tubes (16', 16") housed in suitable transverse channels of the base layer and provided at their ends with means for connection to a unit for the production and low-pressure circulation of a liquid, such as glycol-water, at a precise temperature, usually not exceeding 40°C, any suitable finishing surface (22) for walking on being mounted on the said metallic surface (14) and having aesthetic characteristics adapted on different occasions to the environment in which the radiant mat is positioned and having characteristics such that the heat radiated by the underlying circulation of hot liquid can pass through it.

2. Mat heating system according to Claim 1, **characterized in that** it can be used to form radiant floors, in which case the base layer (11) is fixed to at least one support layer (25) with load-bearing characteristics suitable for the purpose.

3. Mat or floor heating system according to the preceding claims, **characterized in that** it is designed in a modular and interlocking form, with the base layers (11) provided on their sides with male and/or female connectors (111) which are complementary to each other so that they can be joined together sequentially and/or side by side to cover the surface having the shape and extension required on different occasions, the upper finishing layers (22) preferably being such that they cover more than one base module and/or being designed for detachable fastening by any system which provides continuity of the surface for walking on, while each base layer is independent in respect of the metallic layer (14) and the liquid circulation circuit, and the manifolds (16', 16") of each module are provided with means for their connection to those of the neighbouring modules, for serial and/or parallel connection, in such a way that they can be supplied from one unit, or from a small number of units, for producing and circulating the heating liquid.

4. Mat heating system according to Claim 3, in which the manifolds (16', 16") of each module are provided with quick-release self-sealing connectors for fast connection to the corresponding heating circuit (16) and in particular for the fast connection of the different modules to each other and to the heat transfer liquid supply and circulation source.

5. Mat heating system according to Claim 1, in which the said intermediate layer of aluminium is formed from a plurality of sections (14) having a profile substantially in the shape of an inverted omega, whose bent parts (114, 114') engage the said upper channels (12) of the base layer (11) of the mat, on whose upper face these sections bear uniformly with their flanges (214) provided with toothed edges (15) which are linked in a comb-like and hinge-like way to those of the neighbouring sections in such a way as to form a true metallic mesh which is as flexible as the various layers (11, 22) forming the mat, which can thus be easily rolled up or folded for the stages of transport or storage.

6. Mat or floor heating system according to Claim 1, in which the base layer (11) is provided on its upper face not only with parallel channels (12) for housing the said aluminium sections (14) but also with further channels (112), perpendicular to the former ones, which can cover the whole extension of this layer, at constant intervals or at the ends only, in such a way that these channels can be engaged by the bends (116, 116', 216, 216') of the main heating tube (16) and by the manifolds (16', 16"), the intersection nodes (13) of the said channels (12, 112) preferably being suitably connected and enlarged to permit a sufficiently linked bending of the said tubes (16) without kinking and to house the quick-release connectors of the installation.

7. Mat or floor heating system according to Claim 1, in which the base layer (11) is provided on its top with a single row of parallel channels (12) and the bends (116, 116', 216, 216') of the circulating tubes (16) and the manifolds (16', 16") are housed in portions of the base layer fitted into and added to the ends of the base layer (11) of each module, and these added portions are provided with channels to house the projecting ends of the aluminium sections (14) of the module, with the corresponding openings (17, 17', 17") and with the other apertures for the passage of the bends of the main tubes (16) and of the delivery and return manifolds (16', 16").

8. Mat or floor heating system according to Claim 1, in which the base layer (11) is made from any plastics material suitable for the formation of mats and suitable for the purpose, such as EVA (ethyl vinyl acetate), with any necessary reinforcing fillers.

9. Mat or floor heating system according to Claim 1, **characterized in that** the liquid heating unit used is a heat pump (3) with a heat exchanger (2) and a corresponding circulating pump (4).

10. Mat or floor heating system according to Claim 9, **characterized in that** the heating liquid, in the form of glycol-water for example, is drawn from a compensation reservoir located for example in a heat exchanger (2) in which the said liquid is heated by a heat pump (3) to the necessary temperature, which on average does not exceed 40°C, and from which the said liquid is drawn and made to circulate in the radiant mat by a pump (4), heat and pressure probes (5, 105 and 6, 106) being provided to detect the temperature and pressure of the circulating water in both the delivery and the return branch of the mat (1), these branches being provided with solenoid valves (7, 107) and these components being controlled by a programmable electronic process unit (8) which supervises the correct operation of the installation and which is provided, in case of anomalies, with all the necessary safety devices to stop the said installation automatically and give warning of the incident.

11. Mat or floor heating system according to Claim 10, **characterized in that** the heat pump (3) is preferably of the type with a reversible circulation compressor, operating with a hydronic system whose primary fluid can supply heat energy in winter and cold energy in summer, the whole being designed in such a way that the said programming unit (8) can be operated in the summer to set the heat pump (3) to cold production, to close the operating solenoid valves (7, 107) of the mat and to enable the chilled water present in the exchanger (2) to be made to circulate by means of the pump (4) and with the opening of solenoid valves (9, 109) for branching through one or more fan coil units or dehumidifiers (10) to cool the environment.

12. Heating system according to any one or more of the preceding claims, **characterized in that**, in order to facilitate the formation of the said apertures (17, 17', 17"), the curved part of the aluminium sections (14) can be provided, at specified intervals corresponding to those of the channels (112) of the base layer (11), with pairs of transverse pre-formed cuts, in such a way that the portion of channel (114) lying between a pair of the said cuts can be flattened by means of pliers and bent upwards, under the flanges (214), or can be removed by means of cutting pincers, so as to form the said openings at any desired points of the said sections (14).
